# EUROPEAN PATENT SPECIFICATION

(11) **EP 0 743 733 B1**
(45) Date of publication and mention of the grant of the patent: **31.10.2001**
(21) Application number: 96201278.7
(22) Date of filing: 10.05.1996
(51) Int. Cl.: H02G 3/18, H02G 3/08

(54) **Floor unit for electrical distribution**
Fussbodenelement für elektrische Verteilung
Elément de plancher pour la distribution électrique

(30) Priority: 11.05.1995 NL 1000346
(43) Date of publication of application: 20.11.1996
(73) Proprietor: FRIAND ELEKTROTECHNIEK B.V., 6953 CA Dieren (NL)
(72) Inventor: Andréa, Johan Philip, NL-6881 HP Velp (NL)
(74) Representative: Merkelbach, B.

(56) References cited:
- DE-A- 4 234 802
- DE-U- 9 402 158
- PATENT ABSTRACTS OF JAPAN vol. 14, no. 190 (E-0918), 18 April 1990 & JP-A-02 036716 (NIPPON TELEGR & TELEPH CORP), 6 February 1990,

## Description

The invention concerns a so-called floor unit or -box which comprises a distribution arrangement, such as e.g. electrical, hydraulic and/or pneumatic (servo) systems, provided with a cover to be connected to an easily removable distribution arrangement which cover is to be placed on top of the floor unit or -box which is particularly mountable in floors of buildings, halls or (market)places, whereby the cover can lock said unit at floor level, the cable or wire connections to the electrical and/or pneumatic connectors located in the unit, such as switches, cable connectors and/or coupling members, take place via unit or box parts which are applied under floor level, at least a separate inner unit is arranged in said floor unit or -box in which connectors and the like elements are provided, said floor unit can be closed by a cover which top surface has the same level as the building floor concerned.
It is noted that the connections of cables, wires and the like to the connectors located in the unit (electrical, hydraulic, pneumatic) such as switches, cable connectors and/or (fast) coupling members take place via unit or box parts which are applied under floor level.

An important requirement to this floor units is that weather conditions as well as cleaning activities or fire control activities and/or excess water caused by flooding should not affect the distribution arrangement and should also withstand transport loads of trucks, caterpillar vehicles and the like transportation means.
Another important requirement is that an (easily) access to the arrangements in the units concerned must always be possible in order that e.g. controlling or quick replacement of parts can take place.

However, a great problem of such floor units, taken into account the requirement of easily accessibility, still is that moisture (water) and/or other liquid which end up on floor or ground may penetrate via the cover of said unit into the unit space in which the connectors (electrical, pneumatic and the like) are located which consquently will cause operational non-functioning.
The invention solves this problem by introducing a floor unit or -box which is characterized in that the inner unit as well as the floor unit or -box can be locked by one and the same cover provided with means due to which said cover can be manually operated from and moisture-proof connected to said both units.

The German publication DE-U-9402158 discloses a floor unit which is suitable for electrical arrangements. According to this publication the inner unit provided with the electrical arrangements is enclosed in a concrete box which apparently is permanently locked by a cast iron cover. This known unit therefore does not fulfil the requirement of (easy) accessibility to the inner unit which parts e.g. should be quickly replaced in case of mal-functioning, simple due to the fact that the iron cover lacks means for easy (manually) removing.

According to a preferred embodiment of the invention there is fitted a flexible or rubber strip which is arranged over the upper edge of said inner unit, to which the inner side of the cover can be locked in a moisture-proof way. Fixation of the cover to the upper side of the inner unit is achieved effectively by using a screw bolt in connection to a supporting plate of the inner unit on which a nut is provided at the inner side of said cover.

One advantageous embodiment is characterized in that the said inner unit is placed at some distance from the (side) walls of the outer box and is supported on the bottom of the outer box, distance members being placed between the outer and inner box. In this case continuous openings are purposefully provided in distance members so that moisture and the like, which nevertheless enter between the cover edge and the outer unit edge, may leak out.
By this measure, a floor box or floor unit is efficiently achieved not only being of stable construction but moreover an operationally safe sealing can be guaranteed, particularly between the cover and the inner box, in which inner box operationally sensitive parts are located.
The cover is efficiently connected to the inner side of the outer box by means of strip-like hinges, so that it is relatively simple to place the relatively heavy cover, which after all is part of a (bearing) floor, easily within the opening of the outer box.
It is favorable that the strip-like hinges are slidable along the inner wall and through a gap-like opening in the distance members between the inner and outer box, which makes it possible that e.g. the cover remains just above the floor or ground level in the position in which a distribution box arrangement is placed on top of the floor box or floor unit.

The invention will hereinafter be explained by means of an embodiment, and advantages and characteristics of the invention will be illuminated;
- Fig. 1: shows a floor unit according to the invention in a perspective view;
- Fig. 2a and 2b: show a sealing means of the outer box;
- Fig. 3: shows the upper view of the floor unit, in the open position of the cover;
- Fig. 4: shows the cross section along the line A - A in Fig. 3.

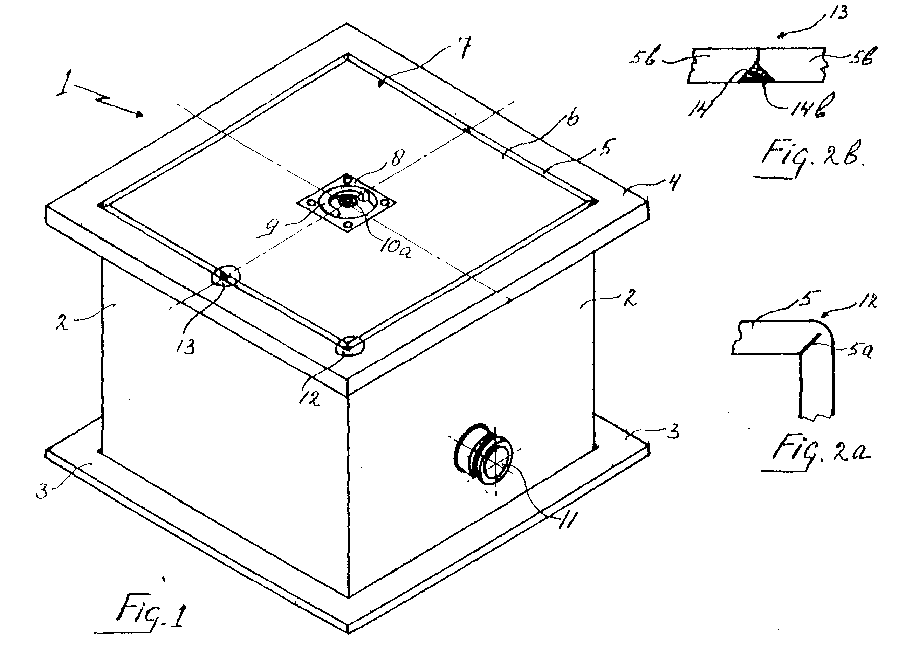

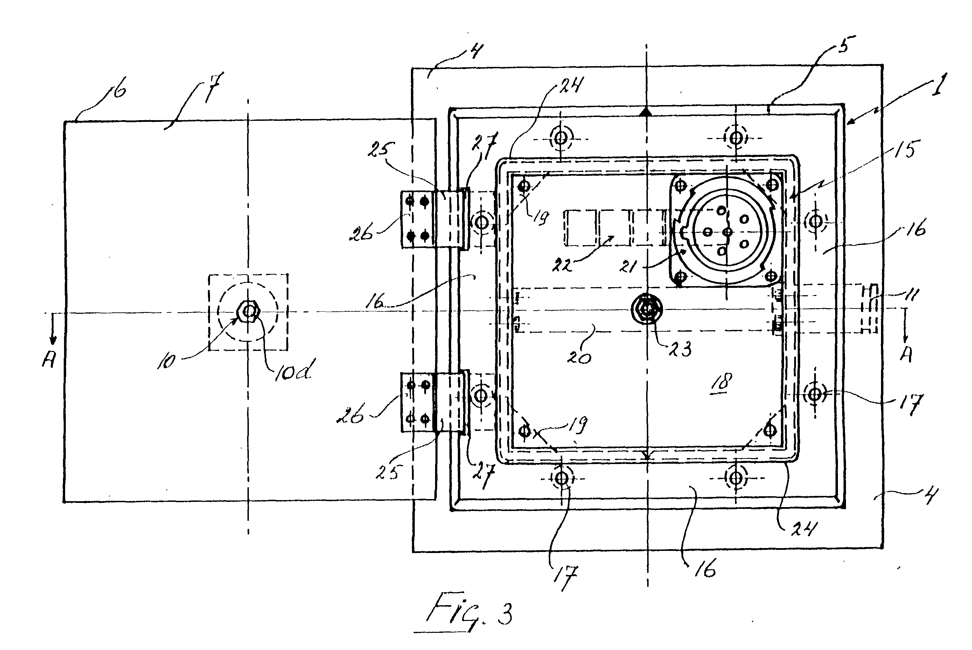

According to Fig. 1 the constructed floor unit, which preferentially consists of resin particularly polythene, is composed of four rectangular walls 2 which are mounted upon or form an integral part of the flat bottom 3 of which an edge protrudes beyond the wall surfaces. The upper side of the floor unit 1 comprises a rectangular edge 4 within which, according to the invention, a strip-like sealing means 5 is interposed that is clasped between the edge 4 and the cover edge 6 of the cover 7. It is preferred that the sealing means 5 consists of a softer (resin) material than the material of which unit and cover are made.
The cover 7 is generally provided with a floor tile pattern, so that it is integral with the tiles of a bearing floor in the building, exhibition hall or premise in which these floor units are applied. In the middle of the cover 7, a mounted recess 8 is placed with a handgrip 9 attached to the cover. The head 10a of a - further shown in Fig. 2 and 3 - nut 10 sticks out in the middle of the mounted part 8, provided with a serrated hole in which a (socket) spanner fits for tightening of the nut.
Side wall 2 shows a cable bush 11 which can, in a manner known per se, be provided with means to be used for fixing electrical cables or pneumatic pipes in the bush while the outer side is sealed properly.
Fig. 2a shows a corner part 12 of the strip-like seal 5 which is mounted between the edge 4 of the outer box 1 and cover edge 6. The strip 5 is an integral part whereby a part 5a of this strip is cut away in corner parts 12 under an angle of about 90°.
Fig. 2b shows the connection 13 between ends 5b of the sealing strip 5 whereby strip parts are cut away under angles of 45°, so that these end parts can be interconnected with a suitable fixing means 14b. Thus, the embodiment according to Fig. 2a and 2b, simply results in a proper sealing between cover edge 6 and box edge 4.

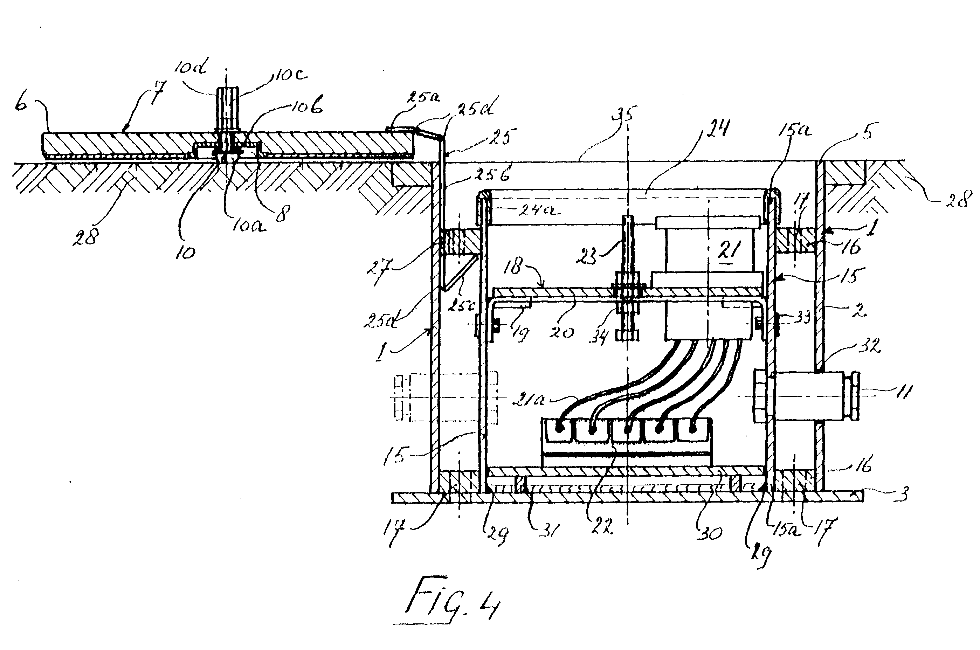

Fig. 3 shows the upper view of the opened floor unit 1 whereby the box 1 forms the outer box according to the invention, in which a box, the inner box 15 is placed. The box is supported on the bottom plate 3 (Fig. 4) and is separated from the outer box 1 by distance members 16. These elements 16 are arranged around the inner box 15 and provided with continuous openings 17, so that moisture and the like located between the outer and inner box can leak out via these openings. In this embodiment, a supporting plate 18 is arranged approximately in the middle of the inner box 15, onto which corner supports 19 and an intermediate support 20 are attached. A switch or plug socket 21 is mounted in one of the corners of the plate 18, from which cables (see Fig. 4) can be led and attached respectively to the clamping box 22 fixed on the bottom of the inner box. Depending on the type and size of the connecting means, e.g. plug sockets or coupling means, the location of the supporting plate 18 is defined with regard to its height. A threaded bolt 23 is attached to the middle of the supporting plate 18 which cooperates with the nut 10 of the cover 7 in order to lock or unlock the cover.
According to the invention, a flexible or rubber strip 24 is arranged over the upper edge of the inner unit 15 which cooperates with the closing cover 7 so that a moisture-proof inner unit is obtained. In order to realize this result easily, the cover 7 is connected to the outer box 1 by means of strip-like hinges 25. The hinges 25 are attached to an end portion 26 with screws to the cover 7 and the other end portion is mounted in a slot 27 of the distance member 16 in a slidable manner (see Fig. 4). In this embodiment the cover 7 can be easily lifted at the hinges 25 by means of the handgrip 9 and turned into the opening of the outer box, whereby the nut 10 can be placed on the screw bolt 23.
Fig. 4 shows the front view according to the cross section A - A in Fig. 3 in which the floor unit 1 with the unlocked cover 7 is placed in a floor 28. The inner box 15 is supported on the bottom plate 3 of the outer box 1 and is additionally sealed at the bottom side with a suitable moisture-proof kit or similar means 29, so that moisture can not penetrate via the bottom side between the plate 3 and the bottom side 15a of the inner box 15. Box 15 is provided at its bottom side with a supporting plate which connects in a moisture-proof way to the walls of the inner box 15 and is attached to supporting means 31. In this embodiment a (cable) clamping box 22 is mounted to the plate 30 in which cable ends 21a coming from the plug socket 21 can be fixed.
The cable bush 11 is fixed in the openings of the walls 2 of both units 1, 15 by means of sealing rings 32. The cables (not shown) are further fixed with known sealing means in bushes 11. Close to the middle of the inner box 15, a second or intermediate supporting plate 18 is attached to the supporting means 18 (Fig. 3) and 19. Therefore, the metal supporting means 18 and 19 are fixed in the resin (PE) walls and plates of the inner box 15 by means of special rivets, also in a moisture-proof manner. A switch, plug socket or a similar coupling means, such as a fast coupling member 21 is mounted which is protected in a moisture-proof way according to the invention. A threaded bolt 23 is fixed in the middle of the supporting plate 18 by means of sealing rings 34 in a moisture-proof way. A flexible or rubber strip 24 is arranged over the upper edge 15a of the inner unit 15, whereby the side-strips 24a are arranged over the edge 15a in such a way that the strip 24 is fixed over the edge. The central portion of the cover 7 is provided with a mounted rectangular recess 8 in which the handgrip 9 of the cover is embedded and the nut 10 is placed in the central part of the recess 8. The nut 10 comprises a head 10a under which a sealing ring 10b is arranged. A shank 10c is attached to the nut head 10a which enters through the cover 7 and comprises a prolonged nut portion 10d.
The cover 7 is, as described before, connected to the outer box 1 by means of two strip-like hinges 25. A hinge 25 is attached to the cover 7 by an end portion 25a with screws to the cover 7 and the other end portion 25b is guided in a slot 27 of the distance member 16 and provided with a bent portion 25c at the end. The hinging function of these hinges 25, which are also made of resin, is achieved by adding weakened parts or slight recesses, respectively, 25d, at the hinge points on the surface of the strips 25.

Positioning of the cover 7 on the box 1 or closing of the floor box, respectively, is realized according to the invention as follows: the cover 7 is preferably lifted by the handgrip 9 and lifted somewhat by hinging strips 25 and turned above the opening 35 of the floor box 1. This movement is allowed by the specific embodiment of the hinges 25 whereby thus the cover 7 firstly - by means of the handgrip - is lifted whereby the hinges 25 are pulled up by their fastening 25a, after which the cover 7 can be lifted around the hinges 25d until above the opening 35 and in the opening 35 of box 1. Hereby the prolonged portion of nut 10 will be placed on the screw bolt 23 and the cover surface will be locked in a moisture-proof way to the rubber strip 24 by fastening the nut 15 with the head 10a and thus the floor box will be brought in its operational position in an industrially safe way.

It is noted that the invention is not restricted to the embodiment of a rectangular floor box; the application is important in the sense of an inner box in which the electrical connectors can be arranged at various heights and whereby the upper side of the inner box can be locked in a moisture-proof way. Furthermore it is advantageous that the outer- and inner box are manufactured mainly of the same (resin) material.
In connection with the stringent electrical safety regulations which are required for the watertightness of the floor box as described above, primarily in view to safeguarding the electrical connections and couplings, it is desirable to take appropriate measures at the installation of the floor box as well.

The invention therefore also concerns a method for placing a floor box as described above. In order to realize this according to the invention, firstly a space of sufficient size is made in floor or ground which space is filled partly with gravel and partly with sand, whereafter said floor box is fixed in this space and surrounded by sand. In practice a hole is dug of approximately 1 square meter, the horizontal upper side of the floor box measures approximately a quarter of a square meter. Half a cubic meter of gravel is dumped in the hole and on top of that a layer of sand is tamped on which the bottom of the floor box is fixed horizontally. The remaining space is then filled with sand and tamped until the desired level, e.g. for the stone and/or concrete layer which serves to seal the upper layer. The stability of the floor box is guaranteed by this method and heavy vehicles thus can not cause any damage by depression and the like. Excess water can easily leak out via the continuous openings 17 into the sand filling.

## Claims

1. Floor unit or -box (1) provided with a cover (7) to be connected to an easily removable distribution arrangement which is to be placed on top of the floor unit or -box for e.g. electrical, hydraulic and/or pneumatic (servo) systems which floor unit (1) is particularly mountable in floors of buildings, halls or (market)places, whereby said cover can lock said unit at floor level, the cable or wire connections to the electrical and/or pneumatic connectors located in the unit, such as switches, cable connectors and/or coupling members, take place via unit or box parts which are placed under floor level, at least one separate inner unit (15) is arranged in said floor unit or -box in which connectors are attached, said floor unit (1) can be closed by a cover (7) which top surface has the same level as the building-floor concerned, **characterized in that** said inner unit (15) as well as said floor unit or -box (1) can be locked by one and the same cover (7) provided with means (5,9,10,25) due to which said cover can be manually operated from and moisture-proof connected to said both units (1,15)

2. Floor unit according to claim 1, **characterized in that** said cover (7) is connected to the innerside of said floor unit or -box (1) by means of strip-like hinges (25), such that said cover (7) can be positioned horizontally at least when opened.

3. Floor unit according to claim 1 or 2, **characterized in that** said cover (7) is provided with a nut (10) that can be screwed on a (screw)-bolt (23) arranged inside said inner unit (15).

4. Floor unit according to claim 1-3 , **characterized in that** said cover (7) at the outside comprises a recess (8) for containing said nut (10) as well as a handgrip (9) for turning said cover (7).

5. Floor unit according to one or more of the preceding claims, **characterized in that** a first supporting plate (20) is arranged about the middle of said inner unit (15) and a second supporting plate (30) arranged close to the bottem of said inner unit (15), on which supporting plates (20,30) connectors (21,22) or the like elements can be attached.

6. Floor unit according to one or more of the preceding claims and claim 5, **characterized in that** on said first supporting plate (20) a screw bolt (23) is applied on which the nut (10) of said cover (7) can be screwed.

7. Floor unit according to one or more of the preceding claims and claim 1, **characterized in that** said inner unit (15) is arranged at some distance from the side walls (2) of said floor unit or -box (1) by distance members (16) as well as supported on the bottem (3) of said unit or box (1) and sealed with a suitable moisture-proof kit or similar means (29).

8. Floor unit according to claim 7, **characterized in that** continuous openings (17) are made in said distance members (16) such that moisture and the like can leak away to the outside of said unit or box (1)

9. Floor unit according to one or more of the preceding claims and claim 2, **characterized in that** said strip-like hinge (25) is partly slidable arranged along the inner wall of said outer box (1) and through an opening (27) in distance members (16) and thereto connected between said inner and outer box (1,15).

10. Floor unit according to claim 9, **characterized in that** said strip-like hinge (25) comprises weakened parts (25d) which function as hinges.

11. Floor unit according to one or more of the preceding claims and claim 1, **characterized in that** a flexible or rubber strip (24) is arranged on the upper edge (15a) of said inner unit (15) to which the inner surface of said cover (7) can be locked moisture-proof.

12. Floor unit according to one or more of the preceding claims, **characterized in that** one single sealing strip (5) is arranged between the outer edge (6) of said cover (7) and the inner edge of said floor unit or -box (1).

13. Floor unit according to claim 12, **characterized in that** the strip which is attached to the corner points (12) of said unit or box (1) and the extremities (14) is bevelled.

14. Floor unit according to one or more of the preceding claims, **characterized in that** bushes (11) are arranged in the walls (2) of said floor unit or -box (1) and said inner unit (15) and provided with sealing rings (32), such that cables and the like elements can be mounted in said units.

15. Floor unit according to one or more of the preceding claims, **characterized in that** said floor unit or -box (1) and said inner unit (15) are manufactured mainly of the same material, in particular polythene.

## Patentansprüche

1. Fußbodenelement oder -box (1) mit einer Abdeckung (7), die mit einer leicht lösbaren Verteileranordnung verbunden werden soll, welche auf der Oberseite des Bodenelementes oder der Bodenbox angeordnet ist, für z.B. elektrische, hydraulische und/oder pneumatische (Servo-) Systeme, wobei das Bodenelement (1) insbesondere in Böden von Gebäuden, Hallen oder Marktplätzen befestigbar ist, die Abdeckung das Element auf Bodenniveau verriegeln kann, die Kabel- oder Leiter-Verbindungen mit den elektrischen und/oder pneumatischen Verbindern, die in dem Element angeordnet sind, z.B. Schalter, Kabelverbinder und/oder Kupplungsbauteile, über Element- oder Box-Teile vorgenommen werden, die auf Unterflurniveau angeordnet sind, mindestens ein getrenntes inneres Element (15) im Bodenelement oder der Bodenbox angeordnet ist, in der Verbinder befestigt sind, wobei das Bodenelement (1) durch eine Abdeckung (7) geschlossen werden kann, deren Oberseite das gleiche Niveau wie der jeweilige Gebäudeboden hat, **dadurch gekennzeichnet, dass** das innere Element (15) wie auch das Bodenelement oder die Bodenbox (1) durch ein und dieselbe Abdeckung (7) verriegelt werden kann, und dieselbe Abdeckung (7) mit einer Vorrichtung (5, 9, 10, 25) versehen ist, mit deren Hilfe die Abdeckung manuell von den beiden Elementen (1, 15) aus und feuchtigkeitsdicht mit den beiden Elementen (1, 15) verbunden werden kann.

2. Bodenelement nach Anspruch 1, **dadurch gekennzeichnet, dass** die Abdeckung (7) mit der Innenseite des Bodenelementes oder der Bodenbox (1) mit Hilfe von streifenartigen Gelenken (25) verbunden ist, derart, dass die Abdeckung (7), zumindest in geöffnetem Zustand, horizontal positioniert werden kann.

3. Bodenelement nach Anspruch 1 oder 2, **dadurch gekennzeichnet, dass** die Abdeckung (7) mit einer Schraubenmutter (10) versehen ist, die auf einen innerhalb des inneren Elementes (15) angeordneten Schraubbolzen (23) aufgeschraubt ist.

4. Bodenelement nach einem der Ansprüche 1 - 3, **dadurch gekennzeichnet, dass** die Abdeckung (7) an der Außenseite eine Aussparung (8) zur Aufnahme der Schraubenmutter (10) sowie eines Handgriffes (9) zum Drehen der Abdeckung (7) aufweist.

5. Bodenelement nach einem oder mehreren der vorausgehenden Ansprüche, **dadurch gekennzeichnet, dass** eine erste Trägerplatte (20) über der Mitte des inneren Elementes (15) und eine zweite Trägerplatte (30) nahe dem Boden des inneren Elementes (15) angeordnet ist, und auf den Trägerplatten (20, 30) Verbinder (21, 22) oder dergl. Elemente befestigt werden können.

6. Bodenelement nach einem oder mehreren der vorausgehenden Ansprüche und Anspruch 5, **dadurch gekennzeichnet, dass** auf der ersten Trägerplatte (20) ein Schraubbolzen (23) angebracht ist, auf den die Schraubenmutter (10) der Abdeckung (7) aufgeschraubt werden kann.

7. Bodenelement nach einem oder mehreren der vorausgehenden Ansprüche und Anspruch 1, **dadurch gekennzeichnet, dass** das innere Element (15) in einem Abstand von den Seitenwänden (2) des Bodenelementes oder der Bodenbox (1) durch Abstandshalter (16) angeordnet ist und am Boden (3) des Elementest oder der Box (1) abgestützt ist und mit einem entsprechenden feuchtigkeitsdichten Kleber oder auf vergleichbare Weise (29) abgedichtet ist.

8. Bodenelement nach Anspruch 7, **dadurch gekennzeichnet, dass** kontinuierliche Öffnungen (17) in den Abstandsteilen (16) ausgebildet sind, derart, dass Feuchtigkeit und dergl. an der Außenseite des Elementes oder der Box (1) abgeleitet werden kann.

9. Bodenelement nach einem der mehreren der vorausgehenden Ansprüche und Anspruch 2, **dadurch gekennzeichnet, dass** das streifenartige Gelenk (25) teilweise gleitend an der Innenwand der äußeren Box (1) und durch eine Öffnung (27) in den Abstandshaltern (16) angeordnet ist und zwischen der inneren und der äußeren Box (1, 15) damit verbunden ist.

10. Bodenelement nach Anspruch 9, **dadurch gekennzeichnet, dass** das streifenartige Gelenk (25) geschwächte Teile (25d) aufweist, die als Scharniere wirken.

11. Bodenelement nach einem oder mehreren der vorausgehenden Ansprüche und Anspruch 1, **dadurch gekennzeichnet, dass** ein flexibler oder Gummistreifen (24) auf der oberen Kante (15a) des inneren Elementes (15) angeordnet ist, mit der die innere Fläche der Abdeckung (7) feuchtigkeitsdicht verriegelt werden kann.

12. Bodenelement nach einem oder mehreren der vorausgehenden Ansprüche, **dadurch gekennzeichnet, dass** ein einzelner Abdichtstreifen (5) zwischen der äußeren Kante (6) der Abdeckung (7) und der inneren Kante des Bodenelementes oder der Bodenboxbox (1) angeordnet ist.

13. Bodenelement nach Anspruch 12, **dadurch gekennzeichnet, dass** der Streifen, der mit den Eckpunkten (12) des Elementes oder der Box (1) und den Extremitäten (14) befestigt ist, ballig ausgebildet ist.

14. Bodenelement nach einem oder mehreren der vorausgehenden Ansprüche, **dadurch gekennzeichnet, dass** Buchsen (11) in den Wänden (2) des Bodenelementes oder der Bodenbox (1) und dem inneren Element (15) angeordnet sind und mit Abdichtringen (32) versehen sind, derart, dass Kabel und dergl. Bauteile in den Elementen befestigt werden können.

15. Bodenelement nach einem oder mehreren der vorausgehenden Ansprüche, **dadurch gekennzeichnet, dass** das Bodenelement oder die Bodenbox (1) und das innere Element (15) im wesentlichen aus dem gleichen Material, insbesondere Polyäthylen, hergestellt sind.

## Revendications

1. Elément ou boîte de plancher (1) doté(e) d'un couvercle connecté à un dispositif de distribution facilement amovible disposé sur la tête de l'élément ou boîte de plancher et destiné(e) à des (servo-)systèmes par exemple électriques, hydrauliques et/ou pneumatiques, ledit élément de plancher (1) pouvant être monté notamment dans des étages ou constructions, des halls ou places (de marché), ledit couvercle pouvant verrouiller ledit élément au niveau du sol, les connexions par câble avec les connecteurs électriques et/ou pneumatiques situés dans l'élément, comme les commutateurs, les connecteurs de câbles et / ou les éléments de couplage pouvant être assurées par l'intermédiaire de parties d'élément ou de boîte placées sous le niveau du sol, au moins un élément interne distinct (15) étant placé dans l'élément ou la boîte de plancher dans lequel/laquelle sont attachés des connecteurs, ledit élément de plancher (1) pouvant être obturé par un couvercle (7) dont la surface externe est à hauteur du sol du bâtiment concerné, **caractérisé en ce que** ledit élément interne (15) ainsi que l'élément ou la boîte (1) de plancher peuvent être verrouillés par un seul et même couvercle (7) équipé de moyens (5, 9, 10, 25) permettant d'actionner ledit couvercle manuellement et de le connecter de façon étanche aux deux éléments (1, 15).

2. Elément de plancher selon la revendication 1, **caractérisé en ce que** ledit couvercle (7) est relié à la face intérieure de l'élément ou de la boîte de plancher (1) au moyen de charnières (25) en forme de plaquettes, de telle sorte que ledit couvercle (7) puisse être disposé horizontalement, du moins en position ouverte.

3. Elément de plancher selon la revendication 1 ou 2, **caractérisé en ce que** ledit couvercle (7) est équipé d'un écrou (10) pouvant être vissé sur un boulon (23) placé à l'intérieur dudit élément interne (15).

4. Elément de plancher selon la revendication 1-3, **caractérisé en ce que** ledit couvercle (7) présente, sur sa face externe, un évidement destiné à recevoir ledit écrou ainsi qu'une poignée manuelle (9) pour pivoter ledit couvercle (7).

5. Elément de plancher selon une ou plusieurs des revendications précédentes, **caractérisé en ce que** un premier panneau de soutien (20) est disposé à peu près à la moitié dudit élément interne (15) et un second panneau de soutien ((30) est disposé près du fond dudit élément interne (15), panneau sur lequel peuvent être attachés des connecteurs (21,22) des plaques de soutien (20,30) ou des éléments analogues.

6. Elément de plancher selon une ou plusieurs des revendications précédentes et selon la revendication 5, **caractérisé en ce que** un boulon (23) sur lequel l'écrou (10) dudit couvercle (7) peut être vissé est apposé sur le premier panneau de soutien (20).

7. Elément de plancher selon une ou plusieurs des revendications précédentes et selon la revendication 1, **caractérisé en ce que** ledit élément intérieur (15) est placé à une certaine distance des parois latérales (2) de l'élément ou de la boîte de plancher (1) grâce à des entretoises (16), soutenu au fond de l'élément ou de la boîte (1) et scellé avec un élément assurant l'étanchéité ou autres moyens similaires (29).

8. Elément de plancher selon la revendication 7, **caractérisé en ce que** des ouvertures continues (17) sont pratiquées dans lesdites entretoises, de telle sorte que l'humidité, notamment, puisse s'écouler vers l'extérieur de l'élément ou de la boîte (1).

9. Elément de plancher selon une ou plusieurs des revendications précédentes et selon la revendication 2, **caractérisé en ce que** ladite charnière (25) en forme de plaquette peut coulisser partiellement le long de la paroi interne de ladite boîte externe (1) , via une ouverture (27) des entretoises (16), assurant ainsi la jonction entre lesdites boîtes internes et externes (1,15).

10. Elément de plancher selon la revendication 9, **caractérisé en ce que** la charnière (25) en forme de plaquette contient des zones affaiblies faisant office de charnières.

11. Elément de plancher selon une ou plusieurs des revendications précédentes et selon la revendication 1, **caractérisé en ce que** une bandelette flexible ou de caoutchouc (24) est disposée sur l'angle supérieur (15a) dudit élément interne (14) par rapport auquel la surface interne dudit couvercle (7) peut être verrouillée de manière étanche.

12. Elément de plancher selon une ou plusieurs des revendications précédentes, **caractérisé en ce que** un seule bandelette d'étanchéité (5) est disposée entre le bord extérieur dudit couvercle (7) et le bord intérieur de l'élément ou de la boîte de plancher (1).

13. Elément de plancher selon la revendication 12, **caractérisé en ce que** la bandelette rattachée aux points de coin (12) de l'unité ou de la boîte (1) ainsi qu'aux extrémités (14) est biseautée.

14. Elément de plancher selon une ou plusieurs des revendications précédentes, **caractérisé en ce que** des douilles (11) sont aménagées dans les parois (2) de l'élément ou de la boîte de plancher (1) et dans ledit élément interne (15) et dotées de bagues de scellement (32), de telle sorte que des câbles et éléments similaires puissent être montés dans lesdits éléments.

15. Elément de plancher selon une ou plusieurs des revendications précédentes, **caractérisé en ce que** l'élément ou la boîte de plancher (1) ainsi que l'élément interne (15) sont constitués principalement du même matériau, à savoir le polyéthylène.
